# DEMANDE DE BREVET EUROPEEN

(11) **EP 1 686 038 A1**
(43) Date de publication de la demande: **02.08.2006**
(21) Numéro de dépôt: 03748134.8
(22) Date de dépôt: 04.09.2003
(51) Int. Cl.: B62B 3/10

(54) **PLATEFORME ROULANTE INTERNE PERMETTANT DE DEPLACER UN CONTENEUR RIGIDE POURVU D'UN SUPPORT DE POSITIONNEMENT**

(30) Priorité: 05.09.2002 ES 200202028
(71) Demandeur: Quadeltrad SL, 18002 Granada (ES)
(72) Inventeur: SANCHEZ VELASCO, Clemente, Jesús, E-18002 Granada (ES)
(86) Numéro de dépôt international: PCT/ES2003/000451
(87) Numéro de publication internationale: WO 2004/022407

(57) **Abrégé**

La présente invention se rapporte au procès d'optimisation du dessin et fabrication de la plate-forme roulante interne et du container rigide, fondée en proportionner une sélection de paramètres géométriques des deux conformations constructives que conjointement on doit déplacer, afin qu'il agisse correctement le mécanisme interne par inclination du container d'insertion et extraction de la plate-forme roulante interne dans le container rigide cité.

La plate-forme roulante interne en utilisant le mécanisme interne d'inclination du container dont l'intérêt essentiel s'enracine, dans qu'il lui permet d'être placée et extraite du container rigide avec réceptacle de position, de section plan-concave, sans être précis le lever du sol, il suffit de l'incliner légèrement, pour que quand le container rigide soit vertical, se soutienne seul par sa base inférieure concave dans le vide central de la couronne circulaire de la plate-forme roulante interne, permettant un roulement conjoint ferme, stable et sûr.

Cette caractéristique est fondamentale, puisque à partir d'un dessin optimisé ensemble du réceptacle de position du container rigide et de la plate-forme roulante interne, ils peuvent être configurés et faits de forme simple et fiable, garantissant l'indéformabilité des deux et une utilisation sûre, permettant une réduction des coûts de fabrication et aussi, d'utilisation au fait que l'installation et extraction de la plate-forme roulante interne, soit une activité sans presque effort, minimisant les tensions osseuses et musculaires des extrémités et de la zone lombaire du dos.

## Description

### OBJET DE L'INVENTION

La présente invention se rapporte à une plate-forme roulante que comme une sélection de paramètres géométriques et caractéristiques constructives, peut être située dessous et dans un réceptacle de position du container rigide de magasinage, formé par le contour d'appui au sol et sa base inférieure concave, puisque cette dernière permet sa situation et assujettissement, de manière facile et sans effort, seul grâce à l'inclination du container rigide, avec sa postérieure verticalité permet sa fixation et déplacement, de manière sûre.

Le mécanisme de l'invention est applicable à tous les container rigides, de section courbe ou polygonale, que parmi son contour d'appui au sol et sa base inférieure se forme un réceptacle de position de dimensions adéquates.

### ÉTAT DE LA TECHNIQUE

Ils sont connus d' innombrables types de plate-formes roulantes pour le déplacement de container rigides d'objets et matériels, qui présentent une grande difficulté dans le moment de son installation dans le container rigide à déplacer, ayant que le lever et indiquer son ajustage sur la plate-forme, causant un considérable effort.

Il ne se connaît pas l'existence documentée d'aucune classe de plate-forme roulante de container rigide qui agit avec le mécanisme d'ancrage interne qui se décrit ici.

Le container rigide avec réceptacle de position ont un seul précédent en ceux utilisés pour le magasinage et transport de gaz liquéfiés, bien que en ceux-ci la fonction est seulement de protection de sa base inférieure et de stabilisation de l'appui au sol.

Non plus, il n'y a pas de documentation de l'existence de container rigides avec réceptacle de position pour plate-forme roulante pour le magasinage et transport d'autres matériels ou objets.

### DESCRIPTION DE L'INVENTION

La présente invention est un système qui permet la mobilisation de n'importe quel container rigide avec un réceptacle adéquat de position pour une plate-forme roulante interne.

Grâce au système qu'on veut protéger s'obtient, de manière facile et avec peu d'effort, emboîter la plate-forme roulante interne dans le container rigide, dans son réceptacle de position, et postérieurement, un doux et stable déplacement roulé de tous deux.

L'utilisation de container rigide avec réceptacle de position pour plate-forme roulante interne fera que sa manipulation pour son déplacement, avec ou sans charge, et son empilement, seront très simples, rapides et moins vaillants, au pair que toutes les actions nécessaires d'encastrement et séparation entre les deux.

### DESCRIPTION DÉTAILLÉE DE L'INVENTION

La longue prolongation des murs de la bague inférieure de sustentation des bouteilles d'emmagasinage et transport de gaz liquéfiés, sauvant sa base inférieure, circulaire et concave, à certaine distance du sol, détermine la création d'un espace cylindrique de deux bases distinctes, ou réceptacle de position, où il est possible situer une plate-forme roulante, circulaire et interne, sur laquelle il s'appuie une étroite frange de couronne circulaire de la base inférieure concave de la bouteille container.

La plate-forme roulante interne, pour cette utilisation, doit entrer par 1' ouverture circulaire intérieur du bord de la bague d'appui dans le sol de la bouteille, que sauvant le court cil horizontal à un diamètre qui oscille entre les 270 mm. et 275 mm. selon le type de bague d'appui et en conditions de première utilisation, donc, le diamètre intérieur utile est en train de se réduire Jusqu'à, à peu près, les 265 mm. avec les bossues par les coups de l'utilisation.

Les caractéristiques essentielles de la plate-forme roulante interne consistent en un maigre disque, avec forme de couronne circulaire, dont le diamètre opérant maximum externe oscille entre 250 mm. et 260 mm. tandis que le diamètre opérant minimum interne est d'environ 160 mm..

Le profil du vide central est double, avec deux aires différentes, une longue et inclinée, à quelques 68° en raison de la verticale, de diamètres, extérieur de 160 mm. et intérieur de 140 mm. que c'est le correspondant à l'autre aire, courte et verticale.

Une autre caractéristique de la plate-forme roulante interne est l'altitude fonctionnelle, déterminée par son épaisseur qui sera variable dépendant des conditions d'utilisation et du matériel de fabrication, dans ce cas plaque métallique de 2 mm. et par l'altitude des roues orientables, comprise entre une maxime de 530 mm et une minime de 450 mm. et qui vont insérées, radialement, dans le centre de la couronne circulaire et distribuées symétriquement.

La sélection des paramètres géométriques et caractéristiques constructives, auparavant définis, permettent que la plate-forme roulante interne entre dedans du réceptacle de position de la bouteille et qu'une bande étroite de sa base inférieure, circulaire et concave, avec une inclination dans cette zone d'environ 68° en raison de la verticale, place sur sa piste inclinée, de pente similaire, et, que sans glissements et sans frôler le bord inférieur de la bouteille dans le sol, les deux puissent remuer facilement.

Toutes ces caractéristiques essentielles de la plate-forme roulante interne est à fin que sa situation dans la bouteille se puisse effectuer, de forme facile, sûre et sans presque effort, seulement l'inclinant 30° depuis la verticale, moment en celui que s'introduit la plate-forme roulante interne dans le réceptacle de position.

La bouteille en récupérant la verticale, à cause de la conformation géométrique du vide central et le profil de son aire inclinée, permettent que sa base inférieure, circulaire et concave, soit en train de tourner son environnement, sans lever la plate-forme roulante du sol, celle-ci reste, finalement, attrapée par la base inférieure de la bouteille, à travers d'une étroite bande inclinée de couronne circulaire.

Ainsi, ne pas avoir à lever la bouteille de GLP quand celle-ci est chargée dans sa totalité la positionner en les plates-formes de roulement conventionnel, s'évite la réalisation d'un grand effort.

Le système, selon la présente invention, du mécanisme d'encastrement et de lâche entre plate-forme roulante interne et container rigide avec le réceptacle de position, permet d'élargir son utilisation à tout type de container, ceux qu'en ce moment se fabriquent pour magasinage et transport de GLP avec un réceptacle de position inférieure, et aussi, à ceux qui se fabriquent exprès désormais avec la conformation caractéristique de deux bases différentes du réceptacle de position.

### EXEMPLE DE LA RÉALISATION DE L'INVENTION

Pour compléter la description qui est entrain de s'effectuer, et avec l'objet d'aider à une meilleure compréhension des caractéristiques de l'invention, accompagne le mémoire descriptif ci-présent, comme partie intégrante du même, trois plans avec représentations schématiques, de caractère illustrant et non limitatif qui incluent un modèle de prototype.

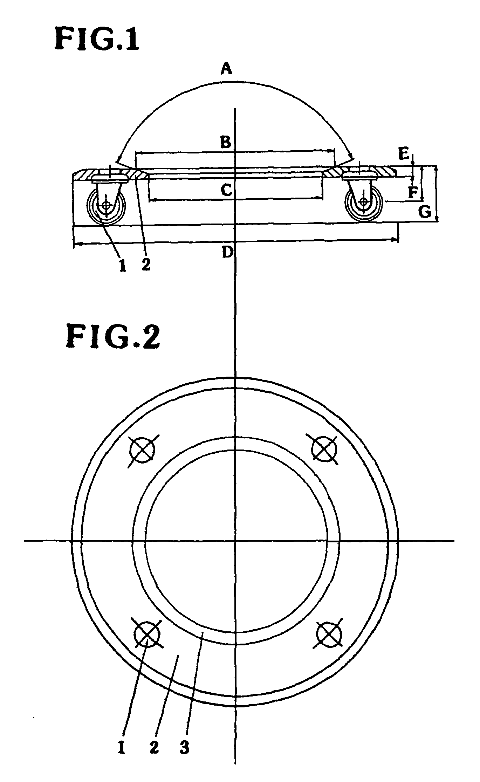

Figure 1 : Vue d'une section de la plate-forme roulante circulaire interne.
   1. Roues orientables.
   2. Disque de sustentation.
      A. Angle de 136° de l'aire inclinée d'appui.
      B. Diamètre extérieur de l'aire inclinée.
      C. Diamètre inférieur de l'aire inclinée.
      D. Diamètre extérieur maximum du disque de sustentation.
      E. Épaisseur du disque d'appui.
      F. Distance de la base supérieure du disque d'appui à l'axe des roues.
      G. Altitude totale de la plate-forme roulante.
Figure 2: Vue en plante supérieure de la même plate-forme.
   1. Fixation des roues orientables.
   2. Disque de sustentation.
   3. Aire inclinée d'appui.

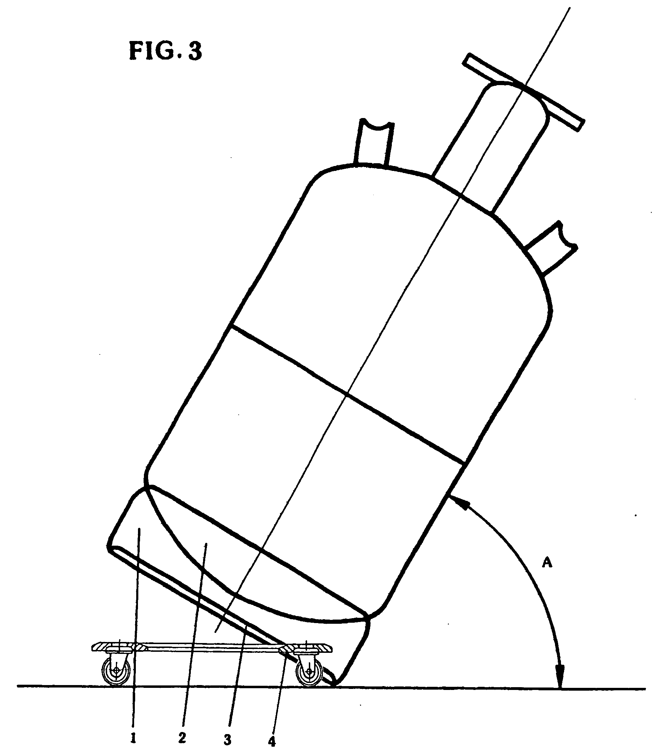

Figure 3. Vue conjointe de la plate-forme dans le moment de sa situation à l'entrée du réceptacle de position de la bouteille inclinée.
   1. Réceptacle de position.
   2. Base inférieure, circulaire et concave.
   3. Bord de la couronne d'appui dans le sol.
   4. Plate-forme circulaire roulante interne.
      A. Angle d'inclination de 60°.

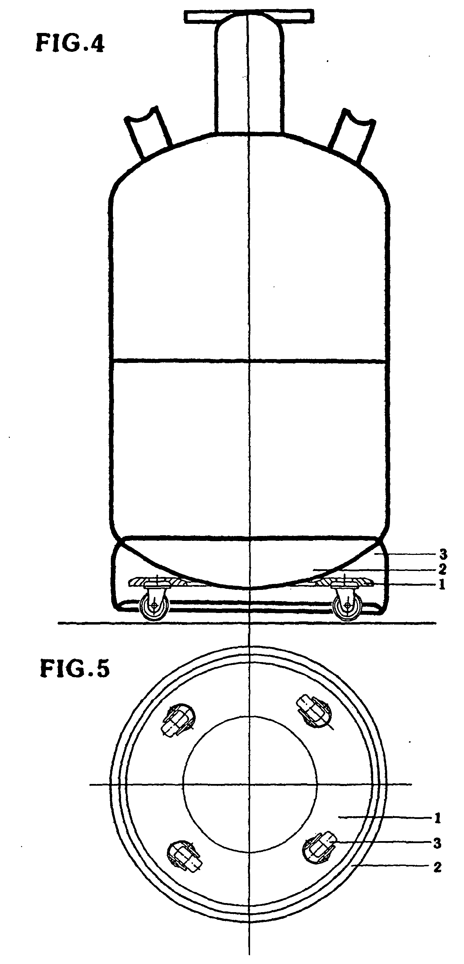

Figure 4. Vue conjointe en section de la base inférieure de la bouteille appuyée, réellement, dans l'aire d'appui inclinée du prototype de la plate-forme circulaire roulante interne.
   Il représente 5. Vue conjointe en plante inférieure de la plate-forme portant à la bouteille.
   1. Plate-forme circulaire roulante interne.
   2. Bord de la couronne d'appui dans le sol.
   3. Roues orientables.

De tout décrit et par l'observation des dessins, se détachent les avantages que présente la plate-forme roulante interne et le container rigide avec réceptacle de position.

En premier lieu il faut mettre en relief la possible présence d'un mécanisme différentiel de charge d'un ressort associé à une roue, avec sortie externe en le plate-forme roulante interne qui sans compliquer l'entrée de la plate-forme en le réceptacle de position, il peut servir d'indication du niveau de charge du bouteille.

Les matériaux et le type de fabrication employés seront indépendants de l'objet de l'invention, ainsi que, par son utilisation, tels comme barils, bouteilles de gaz liquéfiés, boîtes, petites pelles, fer-blanc, cartons, coffres, armoires, canots, bidons, pots, tonneaux et tanks.

Les deux éléments, plate-forme et container, objet de cette invention pourront être fabriqué par jet, par assemblage, coupure ou par embuissonn d'un matériel, total ou principalement, métallique, plastique, vitré, céramique, bois ou fibromateux.

Et finalement, plate-forme et container, objet de cette invention peuvent avoir d'autres formes distinctes à la circulaire décrite, tels comme, ellipsoïde ou polyédrique, de section transversale tournant ou polygonale, par exemple, torique.

## Revendications

1. Plate-forme roulante **caractérisée par** un container avec le réceptacle de position, formé par grand contour périphérique d'appui au sol et une base inférieure interne à certaine altitude du sol, où dedans et dessous se situe et appuie la plate-forme roulante, pouvant être introduite, placée et extraite, sans devoir lever le container du sol, seul grâce à une légère inclination appuyant dans le sol une petite surface du bord périphérique.

2. Plate-forme roulante selon la revendication 1, **caractérisé par**ce qu'une maigre disque de fixation, avec forme de couronne circulaire, sur dont le bord circulaire centrale s'appuie, uniquement, la base interne inférieure concave du container, restant les deux sujets de manière ferme et stable, beaucoup de forme statique comme en mouvement.

3. Plate-forme roulante selon revendication 2, **caractérisé par**ce que le profil de la zone centrale circulaire du disque de fixation, a deux aires différentes, D'ajustement et fixation verticale du container, une longue et inclinée, et une autre, courte et parallèle.

4. Plate-forme roulante selon revendication 1 à 3, **caractérisé par**ce qu'une sélection de paramètres géométriques et constructifs du container, tels comme, la distance de la base inférieure interne du réceptacle de position sur le point d'appui au sol, et l'altitude de la plate-forme roulante, formée par celle des roues orientables et celle de la plaque, ou tube, du disque, ou taureau, de fixation, permet que le container glisse sans frôler dans le sol et de forme stable, et que le mécanisme d'encastrement et lâche entre les deux se fasse sans empêchements.

5. Plate-forme roulante selon revendications 1 à 4, **caractérisé par**ce que la plate-forme roulante interne et le réceptacle de position du container rigide, peuvent avoir d'autres formes, distinctes à la circulaire décrite, tels comme, ellipsoïde ou polyédrique, de section transversale tournant ou polygonale, par exemple, forme torique, et d'autres caractéristiques constructives, comme un nombre indéterminé de roues orientables et/ou fixes, avec ou sans ressort de détermination de charge, toujours avec une adéquate la relation constructive parmi ses différents paramètres géométriques.

6. Plate-forme roulante selon revendications 1 à 5 **caractérisés par**ce que tous deux, container et plate-forme roulante, se pourront fabriquer par jet, par assemblage, par coupure ou par embuissonn d'un matériel, total ou principalement, métallique, plastique, vitré, céramique, bois ou fibromateux, et conformations, tels comme, barils, bouteilles de gaz liquéfiés, boîtes, petites pelles, fer-blanc, cartons, coffres, armoires, lance, bidons, pots, tonneaux et tanks.
